# EUROPEAN PATENT APPLICATION

(11) **EP 3 107 008 A1**
(43) Date of publication of application: **21.12.2016**
(21) Application number: 15305943.1
(22) Date of filing: 18.06.2015
(51) Int. Cl.: G06F 17/30

(54) **METHOD FOR CREATING A LINK, METHOD TO FIND METADATA ASSETS, METHOD TO FIND AUDIOVISUAL ASSETS, DATA CARRIER AND APPARATUS**

(71) Applicant: Thomson Licensing, 92130 Issy-les-Moulineaux (FR)
(72) Inventor: Brune, Thomas, 30449 Hannover (DE); Kamphenkel, Oliver, 31275 Lehrte (DE); Theis, Oliver, 32689 Kalletal (DE); Winter, Marco, 30659 Hannover (DE)

(57) **Abstract**

In the technical field of management and retrieval of audiovisual assets (102), for linking audiovisual assets (102) and metadata assets (105, 106) in a way that is tolerant against postproduction modifications of the audiovisual assets (102) and does not rely upon location information of the assets (102, 105, 106), it is proposed to store, in a fingerprint pair table (108) fingerprint pairs each consisting of a perceptual fingerprint (109) of one audiovisual asset (102) and a digital fingerprint (110) of one metadata asset (105) associated to the audiovisual asset (102).

## Description

### Field of the invention

The present invention relates to the technical field of management and retrieval of audiovisual assets, and in particular to metadata about audiovisual assets used therefor.

### Background of the invention

During production and postproduction of audiovisual content, various kinds of metadata arise. Because of their heterogeneity, metadata are typically stored in separate files of varying filetype. State of the art linking between metadata assets and audiovisual assets during production is an adhoc mixture of time-codes, file-naming, folder-structure and working knowledge. Metadata about audiovisual assets are generated together with the video footage on different scales of time, i.e. frame, take, shot, scene. In postproduction additional metadata may be generated like quality measures.

Although picture and video file formats usually provide places in the bitstream syntax for storing some metadata together with the image content, this is rather limited, and propagation of metadata from one format to another during postproduction usually involves loss of this kind of embedded information.

Therefore metadata is usually stored in separate files like XML, PDF, CSV. For indexing, searching and editing the audiovisual assets, such kind of separately stored metadata must be made usable, e.g. by adding them to a database or file system.

At the end of an audiovisual production or postproduction, multiple versions of same, similar, or slightly or heavily modified content exist on one side, and a database of metadata exists on the other side. Known solutions for connecting both sides during production often are improvised mixtures of time-codes, file-naming, folder-structure and working knowledge. Another solution is monolithic commercial database solutions.

In one straightforward implementation of links between metadata assets and audiovisual assets, the metadata are stored embedded within the audiovisual assets, for instance using private fields or user defined headers contained in many AV formats. Creating such links can be said to be equivalent to a method where the audiovisual asset itself is considered as an AV information, and the metadata asset itself is considered as a Metadata information. As the link, the AV information and the Metadata information are stored together as an information pair.

US 7,269,596 B2 says it describes an audio/video generation apparatus where, for audio/video material, reference values of a reduced amount of data are generated, which provide a quasi-unique reference to the material. The quasi-unique reference is then proposed to be stored in association with metadata that describes the audio/visual material. The quasi-unique reference value may be a hash value. As a result it is possible to derive an association of the metadata with the audio/video material without storing a particular reference on the audio video material. This can be said to be equivalent to a method where a hash value of an audiovisual asset is considered as the AV information, and the metadata asset itself is considered as the Metadata information. As the link, again, the AV information and the Metadata information are stored together as an information pair.

### Summary of the Invention

The general idea of the invention is to link image content and metadata content by storing unique fingerprint pairs for each metadata file and its corresponding image content in a fingerprint pair table. Conceptually, links between image content and metadata content are created by storing nothing but fingerprint pairs in a fingerprint table. Each fingerprint pair consists of a perceptual fingerprint also known as perceptual hash of an audiovisual asset, together with a digital fingerprint also known as a binary hash of a metadata file.

Perceptual fingerprints describe content and not binary representation of audiovisual assets. They are designed to be tolerant against limited kinds and amounts of image manipulation. The advantage of using perceptual fingerprints in connection with audiovisual assets is that image and metadata have to be linked only once. Further copies and derivatives of the audiovisual asset, generated after establishing a set of links, will automatically be comprised and accessible using the proposed fingerprint pair links.

Binary or digital hashes describe an intrinsic property of a digital file, independent of its location, storage medium or the file system used to access it. The advantage of using digital hashes rather than addresses or pointers in connection with metadata assets is, again, that image and metadata have to be linked only once. Further copies of the metadata file, even if under different location or filename, will automatically be comprised and accessible using the existing set of proposed fingerprint pair links.

Note that in the core concept of this invention, keys, indexes, addresses or pointers are not contained in the fingerprint pair table.

With other words, an improved method for creating a link between an audiovisual asset and a metadata asset associated to the audiovisual asset is provided, where a perceptual fingerprint of the audiovisual asset is derived as an AV information, a digital fingerprint of the metadata asset is derived as a metadata information, and the AV information and the metadata information are stored together as an information pair in an information pair table; so that the information pair table comprises pairs of one perceptual fingerprint and one digital fingerprint, each, and thus constitutes a fingerprint pair table.

Correspondingly, an improved method to find metadata assets associated to a given audiovisual asset is provided, where from the given audiovisual asset a perceptual fingerprint is derived as a workpiece AV information; in an information pair table containing information pairs of one AV information and one digital fingerprint as metadata information each, matching information pairs are identified whose AV information matches the workpiece AV information based on a similarity criterion between the perceptual fingerprints being above a threshold; the metadata informations of the matching information pairs are retrieved; and the metadata informations of the matching information pairs are used to access the metadata assets from which the metadata informations were derived based on comparing the digital fingerprint of the matching information pairs to digital fingerprints of a given set of metadata assets.

Correspondingly, an improved method to find audiovisual assets associated to a given metadata asset is provided, where from the given metadata asset a digital fingerprint is derived as a workpiece metadata information; in an information pair table containing information pairs of one perceptual fingerprint as AV information and one metadata information each, matching information pairs are identified whose metadata information matches the workpiece metadata information based on an identity criterion between the digital fingerprints; the AV informations of the matching information pairs are retrieved; and the AV informations of the matching information pairs are used to access the audiovisual assets from which the AV informations were derived based on a similarity criterion between the perceptual fingerprint of the matching information pairs and perceptual fingerprints of a given set of audiovisual assets

Correspondingly, an improved apparatus for creating links between audiovisual assets and metadata assets associated to the audiovisual assets is provided, which comprises an AV information deriving unit, equipped and configured to derive, from a given audiovisual asset, a perceptual fingerprint as an AV information; a metadata information deriving unit, equipped and configured to derive, from a given metadata asset, a digital fingerprint as a metadata information; and a link storing unit, equipped and configured to store, as a link, the AV information and the metadata information together as an information pair in an information pair table; such that the information pair table comprises pairs of one perceptual fingerprint and one digital fingerprint, each, and thus constitutes a fingerprint pair table.

### Brief Description of Drawings

Exemplary embodiments of the invention are illustrated in the drawings and are explained in more detail in the following description.

In the figures,
- **Fig. 1**: illustrates, symbolically, a first use example of the method according to an embodiment of the invention for creating a link between an audiovisual asset and a metadata asset associated to the audiovisual asset;
- **Fig. 2**: illustrates, symbolically, a second use example of the method according to an embodiment of the invention for creating a link between an audiovisual asset and a metadata asset associated to the audiovisual asset;
- **Fig. 3**: illustrates, symbolically, an extended implementation of the method according to an embodiment of the invention;
- **Fig. 4**: illustrates, symbolically, a process according to an embodiment of the invention of finding metadata associated to a given audiovisual asset from a set of audiovisual assets;
- **Fig. 5**: illustrates, symbolically, a process according to an embodiment of the invention of finding metadata associated to a given audiovisual asset that is not from the set of audiovisual assets;
- **Fig. 6**: illustrates, symbolically, a process according to an embodiment of the invention of finding audiovisual assets that are associated to a given metadata asset;
- **Fig. 7**: illustrates the method for creating a link according to an embodiment of the invention;
- **Fig. 8**: illustrates the method to find metadata assets according to an embodiment of the invention;
- **Fig. 9**: illustrates the method to find audiovisual assets according to an embodiment of the invention; and
- **Fig. 10**: illustrates an apparatus for creating links according to an embodiment of the invention.

### Description of Preferred Embodiments

Creating a permanent link between image content and metadata in video or film production workflows is proposed by storing an entry in a table of fingerprint pairs. The entry describes the image content on the one side, independent from its binary representation, and metadata files on the other side, independent from their location or storage medium.

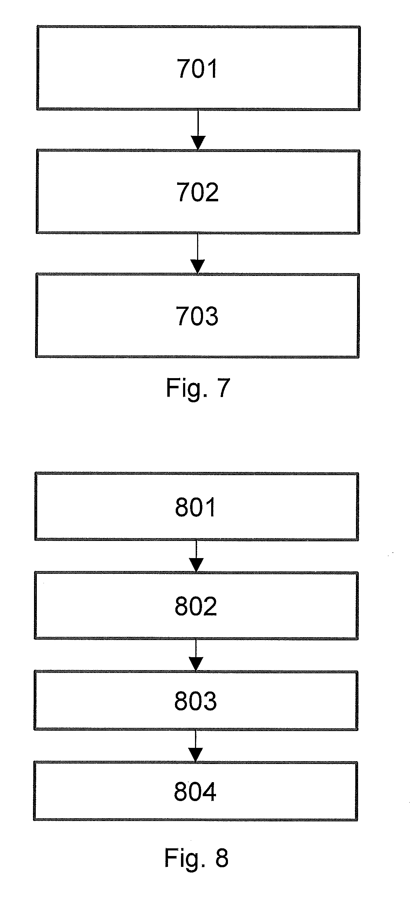

**Fig. 7** illustrates a method according to an embodiment of the invention for creating a link between an audiovisual asset and a metadata asset associated to the audiovisual asset. The method comprises deriving **701,** from the audiovisual asset, a perceptual fingerprint as an AV information; deriving **702** from the metadata asset a digital fingerprint as a Metadata information; and storing **703** the AV information and the Metadata information together as a fingerprint pair in a fingerprint pair table. Note that the steps of deriving **701** the perceptual fingerprint and deriving **702** the digital fingerprint do not depend on each other, and thus can be realized in any suitable order or timing.

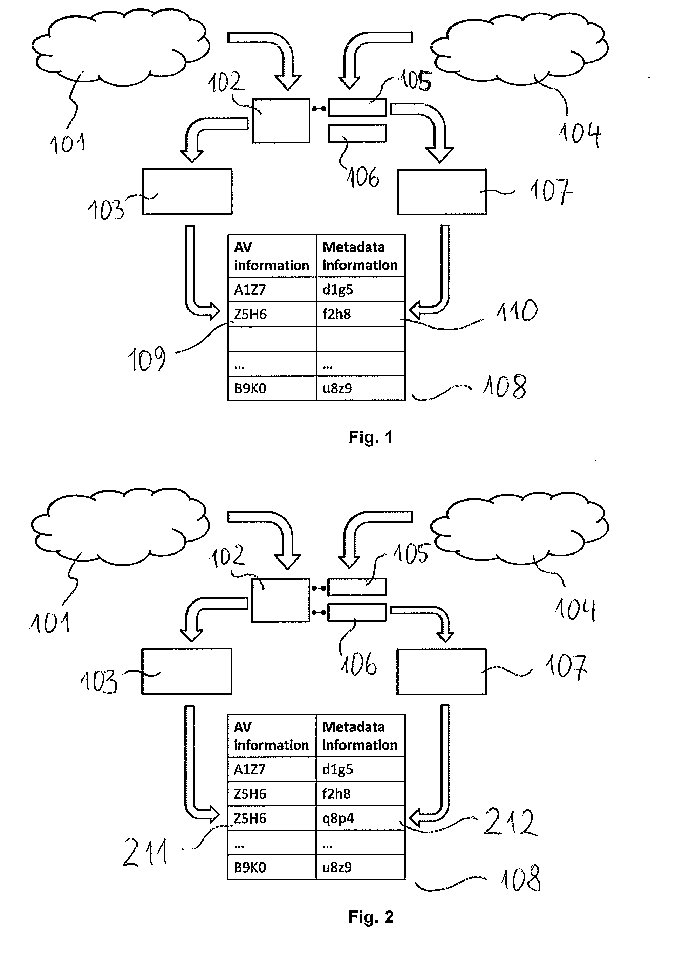

With other words, at a certain point in time, e.g. during ingest, an image and corresponding or associated metadata come together, and their fingerprints are created and stored pairwise in an arbitrary digital format. This process is illustrated in **Fig. 1** and **Fig. 2****.** An entry is created for each metadata file. Image fingerprints may therefore appear more than once in the table.

**Fig. 1** illustrates, symbolically, a first instance of the method according to an embodiment of the invention for creating a link between an audiovisual asset and a metadata asset associated to the audiovisual asset.

The Figure symbolically illustrates an audiovisual asset **102** from a set of audiovisual assets **101,** as well as a first metadata asset **105** and a second metadata asset **106** from a set of metadata assets **104.** The first metadata asset **105** is assumed to be associated to the audiovisul asset **102.** For creating a link between the audiovisual asset **102** and the first metadata asset **105,** a perceptual fingerprint **109** is created **103** from the audiovisual asset **102,** a digital fingerprint **110** is created **107** from the first metadata asset **105,** and the perceptual fingerprint **109** together with the digital fingerprint **110** are stored as a fingerprint pair in a fingerprint pair table **108.** In this, the perceptual fingerprint **109** constitutes the AV information, and the digital fingerprint **110** constitutes the Metadata information.

Here and in the following, the notion of "audiovisual asset" may, without limitation, refer to an image as a standalone file, a single image or frame or field from a video sequence, a video subsequence from a video sequence, a point in time in an audio signal, a piece of audio between a start time and a stop time from an audio file or audio signal, and the like. The notion of "image" may, without limitation, refer to bi-level, black and white continuous tone, color, pseudo color, multichannel, or multispectral pictorial data and the like. The notion of "video" may refer, without limitation, to moving picture image sequences in any format, with or without accompanying audio, and the like.

**Fig. 2** illustrates, symbolically, a second instance of the method according to an embodiment of the invention for creating a link between an audiovisual asset and a metadata asset associated to the audiovisual asset. Here and in the following, identical elements in the Figures are denoted by identical reference numerals.

Here it is assumed that, after having created the link **109, 110** between the audiovisual asset **102** and the first metadata asset **105,** the second metadata asset **106** has also been found to be associated to the audiovisual asset **102,** so that a link between them shall be created and stored. A perceptual fingerprint **211** is created **103** from the audiovisual asset **102,** a digital fingerprint **212** is created **107** from the second metadata asset **106,** and the perceptual fingerprint **211** together with the digital fingerprint **212** are stored as a fingerperint pair in the fingerprint pair table **108.** Of course, because the audiovisual asset **102** is assumed to be the same as that of the instance illustrated in **Fig. 1****,** the perceptual fingerprint **211** derived therefrom will obviously be the same as the perceptual fingerprint **109** derived when creating the link between the audiovisual asset **102** and the first metadata asset **105.** An extended implementation will be disclosed below to address this. This example is designed to illustrate a situation where more than one metadata asset is associated to the same audiovisual asset. In such a case, the perceptual fingerprint **109** of the first fingerprint pair and the perceptual fingerprint **211** of the second fingerprint pair, both referring to the same audiovisual asset **102,** have an identical value, symbolized in the Figure by "z5H6".

Note that, conversely, a digital fingerprint of a specific metadata asset may also appear more than once in the fingerprint pair table. For this, assume a metadata asset that is defined to indicate "Actor XY participates in scene". Such a metadata asset can easily be imagined to be associated to more than a single scene of a longer video or movie. Each of these instances might then be represented by one fingerprint pair in the fingerprint pair table.

**Fig. 8** illustrates a method to find metadata assets according to an embodiment of the invention, with other words a method to search for those metadata assets that are associated to a given workpiece image or audiovisual asset. The method comprises deriving **801,** from the given audiovisual asset, a perceptual fingerprint as a workpiece AV information; identifying **802,** in a fingerprint pair table containing fingerprint pairs of one perceptual fingerprint and one digital fingerprint each, matching fingerprint pairs whose perceptual fingerprint matches or is sufficiently similar to the workpiece AV information; retrieving **803** the digital fingerprints of the matching fingerprint pairs; and using **804** the digital fingerprints of the matching fingerprint pairs to access the metadata assets from which the digital fingerprints were derived.

With other words, after the fingerprint pair table has been created, searching a metadata asset or metadata assets that are associated to a given workpiece image conceptually requires the following steps:
a) Create the perceptual fingerprint of the workpiece image,
b) Go to the fingerprint pair table and find fingerprint pairs whose perceptual fingerprint equals or is sufficiently similar to the perceptual fingerprint of the workpiece image,
c) Access the digital fingerprints that are stored in the found fingerprint pairs,
d) Go to the set of metadata assets and find metadata asssets whose digital fingerprint equals the digital fingerprints accessed in the previous step.

The conceptually same procedure can be carried out for the inverse search. Notice that the fingerprint pair table is usable in both directions where either side serves to enter the table and the respective other side provides a value that allows to acess the final outcome. This is unlike conventional hash tables that are built for one way use only.

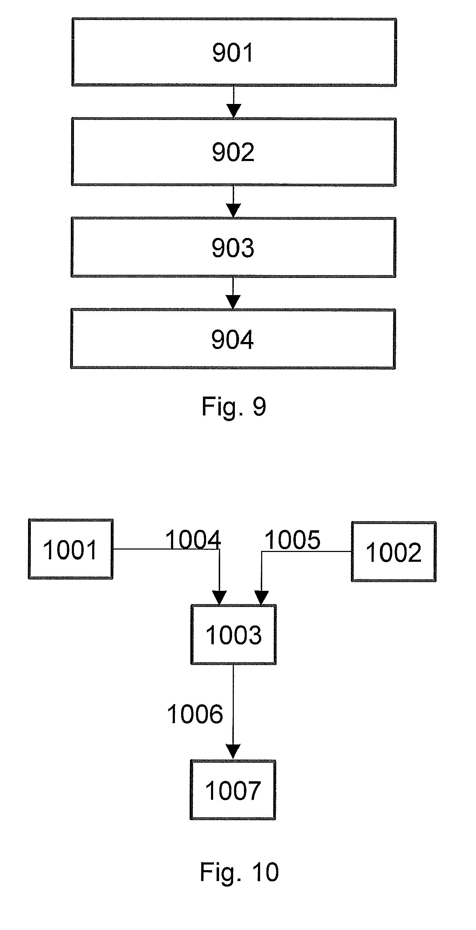

**Fig. 9** illustrates a method according to an embodiment of the invention to find audiovisual assets associated to a given metadata asset. The method comprises deriving **901,** from the given metadata asset, a workpiece digital fingerprint; identifying **902,** in a fingerprint pair table containing fingerprint pairs of one perceptual fingerprint and one digital fingerprint each, matching fingerprint pairs whose digital fingerprint matches the workpiece digital fingerprint; retrieving **903** the perceptual fingerprints of the matching fingerprint pairs; and using **904** the perceptual fingerprints of the matching fingerprint pairs to access those audiovisual assets whose perceptual fingerprints match or are sufficiently similar to the perceptual fingerprints of the matching fingerprint pairs.

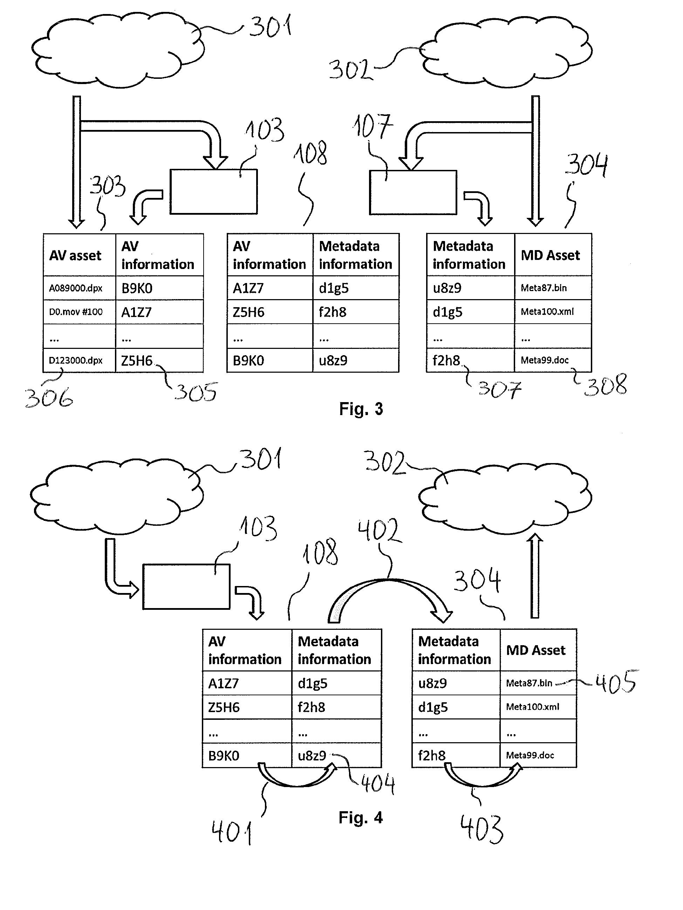

Note that step a) of the above procedure may become inefficient as soon as searching associated metadata for a same audiovisual asset happens repeatedly. Analogously, step d) of the above procedure may become inefficient as soon as more than a single search request of whatever kind is done. More generally, any repeated derivation of fingerprints from assets may become inefficient. **Fig. 3** illustrates, symbolically, an extended implementation of the method according to an embodiment of the invention, which allows to avoid such inefficiencies. The extended implementation not only comprises the fingerprint pair table **108,** but also an AV link table **303** and an MD link table **304** which are set up prior to any search. Note that other embodiments of the invention may comprise only the AV link table **303** or only the MD link table **304.**

The AV link table **303** contains pairs consisting each of one perceptual fingerprint **305** and one AV asset location information **306.** The AV asset location information **306** may be, without limitation, a filename, a pointer, an address information, or an index into an array containing any of these, or the like. The AV link table **303** enables that repeated acts of deriving perceptual fingerprints from audiovisual assets are avoided and are substituted by a lookup in the AV link table **303.** The use of the AV link table **303** is twofold, corresponding to the two possible directions in which the table can be accessed. Coming from one particular audiovisual asset, e.g. a workpiece audiovisual asset, the AV link table **303** allows to directly look up instead of algorithmically derive the perceptual fingerprint of that workpiece audiovisual asset. This looked up perceptual fingerprint can then next be used to access the fingerprint pair table. In the other direction, coming from a given perceptual fingerprint value, as e.g. delivered from a fingerprint pair table lookup, the AV link table **303** allows to directly search for sufficiently similar perceptual fingerprints without having to repeatedly derive these from the AV assets in the set of AV assets. After a set of sufficiently similar perceptual fingerprints has been found, the AV link table **303** allows to directly access, via the AV asset location information, the audiovisual assets associated to the sufficiently similar perceptual fingerprints.

The MD link table **304** contains pairs consisting of one digital fingerprint **307** and one MD asset location information **308,** each. The MD asset location information **308** may be, without limiation, a filename, a pointer, an address information, or an index into an array containing any of these, or the like. The MD link table **304** enables that repeated acts of deriving digital fingerprints from metadata assets are avoided and are substituted by a lookup in the MD link table **304.**

The use of the MD link table **304** is twofold, corresponding to the two possible directions in which the table can be accessed. Coming from one particular metadata asset, e.g. a workpiece metadata asset, the MD link table **304** allows to directly look up instead of algorithmically derive the digital fingerprint **307** of that workpiece metadata asset. This looked up digital fingerprint **307** can then next be used to access the fingerprint pair table **108.** In the other direction, coming from a given digital fingerprint value, as e.g. delivered from a fingerprint pair table lookup, the MD link table **304** allows to directly search for metadata assets having identical digital fingerprints without having to derive them from the MD assets in the set of MD assets.

**Fig. 4** illustrates, symbolically, a process according to an embodiment of the invention of finding metadata assets associated to a given audiovisual asset. Without restriction of generality, we assume here a modified set of audiovisual assets **301.** The modified set of audiovisual assets **301** may or may not differ from the set of audiovisual assets **101** as it was used when creating the fingerprint pairs. Further manipulated images may have been added, interim work results may have been removed, or interim work results may have been replaced by subsequent processing stages' results. Taking that into account, **Fig. 4** shows how a metadata search is carried out:
From the audiovisual asset out of the modified set of audiovisual assets **301,** a workpiece perceptual fingerprint is created **103.** The workpiece perceptual fingerprint is used to enter the fingerprint pair table **108.** In the fingerprint pair table **108,** those one or more fingerprint pairs are retrieved, whose perceptual fingerprint is identical or sufficiently similar to the workpiece perceptual fingerprint. In each of the one or more retrieved fingerprint pairs, the corresponding digital fingerprint **404** is accessed **401.** The corresponding digital fingerprint **404** is used to access **402** the MD link table **304.** In the MD link table **304,** the corresponding MD asset location information **405** is looked up **403.** The MD asset location information **405** allows to access the metadata asset.

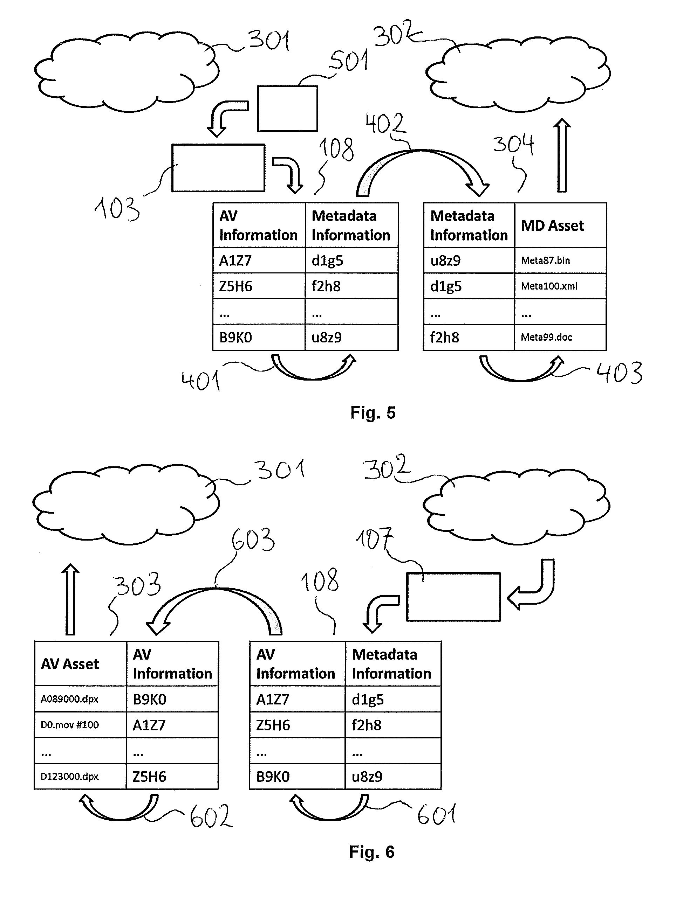

**Fig. 5** illustrates, symbolically, a process according to an embodiment of the invention of finding metadata associated to a given audiovisual asset **501** that is not from the modified set of audiovisual assets **301.** In this case, creation **103** of the workpiece perceptual fingerprint uses as input the given audiovisual asset **501.** The remainder of the process is identical to what was desribed above for **Fig. 4****.** If the given audiovisual asset **501** happens to be an identical copy of another audiovisual asset that is contained in the modified set of audiovisual assets **301,** searching for exactly identical perceptual fingerprints may be done and will produce all those metadata assets that were associated to the another audiovisual asset. If the given audiovisual asset **501** happens to be a modification of another audiovisual asset that is contained in the modified set of audiovisual assets **301,** searching for exactly identical perceptual fingerprints is likely to produce no match, and searching for sufficiently similar perceptual fingerprints instead may be more appropriate.

**Fig. 6** illustrates, symbolically, a process according to an embodiment of the invention of finding audiovisual assets that are associated to a given metadata asset. Using as input the given metadata asset that is from the set of metadata assets **302,** a workpiece digital fingerprint is created **107** and is used to access the fingerprint pair table **108.** In the fingerprint pair table **108,** those one or more fingerprint pairs are retrieved, whose digital fingerprint equals the workpiece digital fingerprint. For each of the one or more retrieved fingerprint pairs, the corresponding perceptual fingerprint is accessed **601.** The corresponding perceptual fingerprint is used to access **603** the AV link table **303.** In the AV link table **303,** the corresponding AV asset location information is looked up **602.** This may encompass retrieving all those records, whose perceptual fingerprint is identical or sufficiently similar to the corresponding perceptual fingerprint as accessed from the fingerprint pair table. The AV asset location information allows to access the audiovisual asset or assets from the set of audiovisual assets **301.**

It is important to note that also in this case the image data set, with other words the set of audiovisual assets, may not be the same compared to the point in time when the fingerprint pairs have been created.

**Fig. 10** illustrates an apparatus for creating links according to an embodiment of the invention. The apparatus comprises an AV information deriving unit **1001,** equipped and configured to derive, from a given audiovisual asset, a perceptual fingerprint as an AV information **1004;** an MD information deriving unit **1002,** equipped and configured to derive, from a given metadata asset, a digital fingerprint as a Metadata information **1005;** and a link storing unit **1003,** equipped and configured to store, as a link, the AV information **1004** and the Metadata information **1005** together as an information pair **1006** into an information pair table **1007,** so that the information pair table **1007** comprises pairs of one perceptual fingerprint and one digital fingerprint, each.

Information about perceptual image fingerprints can be found in Anonymous, "Detecting Similar and Identical Images Using Perseptual Hashes", retrieved May 6, 2015 from http://hackerlabs.org/blog/2012/07/30/organizing-photos-with-duplicate-and-similarity-checking/, or from F. Weinhaus, "Tests Of Perceptual Hash (PHASH) Compare Metric", retrieved May 6, 2015 from http://www.fmwconcepts.com/misc_tests/perceptual_hash_test_resul ts_510/.

Information on digital fingerprints can be found in R. Rivest, "The MD5 Message-Digest Algorithm", RFC 1321, MIT Laboratory for Computer Science and RSA Data Security, Inc., April 1992.

The invention allows to connect video footage and corresponding metadata, to find metadata corresponding to certain image content and to find image content corresponding to certain metadata.

The invention does this in a "perceptual" way, i.e. in such a way that the links are tolerant against certain kinds of video postprocessing like color grading. On the side of the metadata, the methods and apparatus according to the invention don't rely upon filenames and/or storage locations of the MD assets.

With image fingerprints describing content and not binary representation, image and metadata have to be linked only once; further copies (with potential modifications) of the image will automatically link to the corresponding metadata.

The invented approach allows to find metadata corresponding to a certain (perceptual) image content, and to find images of identical or close perceptual content across production stages, because they are linked by a given MD item.

Advantageously, the invention does not rely on filenames and storage locations, nor on time codes, for the linking. It allows bidirectional searching between images and metadata. It inherently links image copies to metadata files. A link created once between an image and a piece of metadata remains useful and usable even for metadata that were discarded and lateron again provided, be it in a different storage location.

With other words, for linking audiovisual assets and metadata assets in a way that is tolerant against postproduction modifications of the audiovisual assets and does not rely upon location information of the assets, it is proposed to store fingerprint pairs each consisting of a perceptual fingerprint of one audiovisual asset and a digital fingerprint of one metadata asset associated to the audiovisual asset.

## Claims

1. Method for creating a link between an audiovisual asset (102) and a metadata asset (105) associated to the audiovisual asset (102), comprising:
- deriving (103), from the audiovisual asset (102), an AV information (109),
- deriving (107), from the metadata asset (105), a metadata information (110),
- storing, as the link, the AV information (109) and the metadata information (110) together as an information pair in an information pair table (108); and **characterized in that**
- as the AV information (109), a perceptual fingerprint of the audiovisual asset (103) is derived, and
- as the metadata information (110), a digital fingerprint of the metadata asset (105) is derived,
- so that the information pair table comprises pairs of one perceptual fingerprint and one digital fingerprint, each.

2. Method to find metadata assets associated to a given audiovisual asset, comprising:
- deriving, from the given audiovisual asset, a workpiece AV information,
- identifying, in an information pair table containing information pairs of one AV information and one metadata information each, matching information pairs whose AV information matches the workpiece AV information,
- retrieving the metadata informations of the matching information pairs,
- using the metadata informations of the matching information pairs to access the metadata assets from which the metadata informations were derived; and **characterized in that**
- as the AV information, a perceptual fingerprint of the audiovisual asset is used,
- as the metadata information, a digital fingerprint of the metadata asset is used,
- the identifying of matching information pairs is based on a similarity criterion between the perceptual fingerprints being above a threshold, and
- the using of the metadata informations of the matching information pairs to access the metadata assets is based on comparing the digital fingerprint of the matching information pairs to digital fingerprints of a given set of metadata assets.

3. Method to find audiovisual assets associated to a given metadata asset, comprising:
- deriving, from the given metadata asset, a workpiece metadata information,
- identifying, in an information pair table containing information pairs of one AV information and one metadata information each, matching information pairs whose metadata information matches the workpiece metadata information,
- retrieving the AV informations of the matching information pairs,
- using the AV informations of the matching information pairs to access the audiovisual assets from which the AV informations were derived; and **characterized in that**
- as the AV information, a perceptual fingerprint of the audiovisual asset is used,
- as the metadata information, a digital fingerprint of the metadata asset is used,
- the identifying of matching information pairs is based on an identity criterion between the digital fingerprints, and
- the using of the AV informations of the matching information pairs to access the audiovisual assets is based on a similarity criterion between the perceptual fingerprint of the matching information pairs and perceptual fingerprints of a given set of audiovisual assets.

4. Non-transient data carrier containing program code which, when executed in a programmable apparatus, causes a method according to one of claims 1 to 3 to be performed.

5. Non-transient data carrier containing pairs of one perceptual fingerprint of an audiovisual asset and one digital fingerprint of a metadata asset, each.

6. Data carrier according to Claim 5, not containing the audiovisual asset itself, nor the metadata asset itself, nor any location information about the audiovisual asset nor any location information about the metadata asset.

7. Apparatus for creating links between audiovisual assets and metadata assets associated to the audiovisual assets, comprising:
- an AV information deriving unit, equipped and configured to derive, from a given audiovisual asset, an AV information,
- a metadata information deriving unit, equipped and configured to derive, from a given metadata asset, a metadata information,
- a link storing unit, equipped and configured to store, as a link, the AV information and the metadata information together as an information pair in an information pair table; and **characterized in that**
- the AV information deriving unit is configured to derive as the AV information a perceptual fingerprint of the audiovisual asset, and
- the metadata information deriving unit is configured to derive as the metadata information a digital fingerprint of the metadata asset,
- so that the information pair table comprises pairs of one perceptual fingerprint and one digital fingerprint, each, and thus constitutes a fingerprint pair table.

8. The method according to Claim 1 or the apparatus according to Claim 7, wherein the information pair table does not comprise the audiovisual asset itself, nor the metadata asset itself, nor any location information about the audiovisual asset nor any location information about the metadata asset.
